(19) Europäisches Patentamt
European Patent Office
Office européen des brevets

(11) **EP 4 391 644 A1**

(12) **EUROPEAN PATENT APPLICATION**

(43) Date of publication:
**26.06.2024 Bulletin 2024/26**

(21) Application number: **22383236.1**

(22) Date of filing: **19.12.2022**

(51) International Patent Classification (IPC):
**H04W 36/00** $^{(2009.01)}$ **G06N 3/092** $^{(2023.01)}$
**H04W 24/02** $^{(2009.01)}$

(52) Cooperative Patent Classification (CPC):
**H04W 36/008375; G06N 3/092; H04W 24/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Telefonica Innovacion Digital SL 28050 Madrid (ES)**

(72) Inventors:
- **Arapakis, Ioannis**
  **28013 Madrid (ES)**
- **Suárez-Varela Maciá, José Rafael**
  **28013 Madrid (ES)**
- **Lutu, Andra**
  **28013 Madrid (ES)**

(74) Representative: **Carlos Hernando, Borja Garrigues IP, S.L.P. Hermosilla, 3 28001 Madrid (ES)**

(54) **HANDOVER OPTIMISATION IN A CELLULAR NETWORK BY MULTI-OBJECTIVE DEEP REINFORCEMENT LEARNING APPLIED BY AGENTS DEPLOYED IN BASE-STATIONS**

(57) A method, distributed system, device and computer programs for efficient and distributed network optimization of a cellular network are proposed. The cellular network is distributed in different cells where each cell comprises a base transceiver station providing network coverage to a plurality of computing devices, each computing device being associated to a user. The method comprises associating a computing agent to each base transceiver station; receiving, by a given computing agent, from at least one given computing device connected to its associated base transceiver station, signal strength information of the given computing device, the signal strength information being measured on the given computing device for the associated base transceiver station and for neighboring cells; determining, by the given computing agent, a handover decision for said given computing device by means of executing a reinforced learning decision-making algorithm on an established trained policy and on the received signal strength.

FIG. 3

## Description

## Technical Field

The present invention relates to a method, system, device and computer programs for efficient and distributed network optimization of cellular networks.

## Background of the Invention

The fast urbanization introduces growing populations in cities and presents significant mobility and sustainability challenges. With large volumes of data traffic increasingly shifting from office desktops to mobile devices, network and data access quality provisioning have assumed even higher significance. More specifically, mobile data usage is forecast to grow by more than 400% from 2021 to 2026, designating fairness and quality of service in telecom services as factors of paramount importance. The increasing demand for telecommunication services is being further exaggerated, considering the introduction of IoT based technology in the market and the widespread adoption of mobile devices by end-users [1]. To date, for billions of mobile users who are accessing the Internet as they move, the cellular network plays a pivotal role, since it is the only global-scale infrastructure with ubiquitous mobility support.

Central to the mobility management of a cellular network is a high-value and pivotal service: the handover scheme. The handover scheme - which is implemented at the edge (cells) due to the demand for real-time and scalable decision-making - is responsible for routing mobile devices from one cell to another, as users navigate in an urban area [2], and can affect the Quality of Experience (QoE). For instance, data services are disrupted if handovers are delayed (e.g., no handover yet while the old cell's radio signal quality is too weak); data throughput drops when a handover makes a suboptimal choice (e.g., switching a device to a 2G cell instead of high-speed 4G cell). Overall, making a good handover decision requires to jointly account for a wide variety of aspects (e.g., QoE, energy consumption, performance impact on other users and cells), which leads to the formulation of a highly complex high-dimensional, multi-objective optimization problem. Since the dimensionality of this problem setting is typically very large, efficient optimization strategies are usually implemented in a central cloud environment (e.g., MME in 4G networks), using sufficiently powerful computational hardware without making effective use of the - individually small, but collectively substantial - distributed computational resources on the edge (cell level).

Reinforcement Learning (RL) is a subclass of Machine Learning (ML) that can learn by maximizing rewards in some environment. Reinforcement Learning algorithms are useful when a problem involves making decisions or taking actions. More specifically, RL provides a mathematical formalism for learning-based control. By utilizing RL, near-optimal policies for optimizing reward functions that define what an agent should do, while the RL algorithm determines how to do it can be automatically learned. RL algorithms can, in principle, employ any statistical learning model, but the introduction of high-capacity function approximators - deep neural networks - into RL, along with effective algorithms for training them, has allowed RL methods to achieve excellent results in a wide range of domains, like game control [11, 30, 38, 39], robotics [26] and related fields [9, 28].

Training paradigms in reinforcement learning

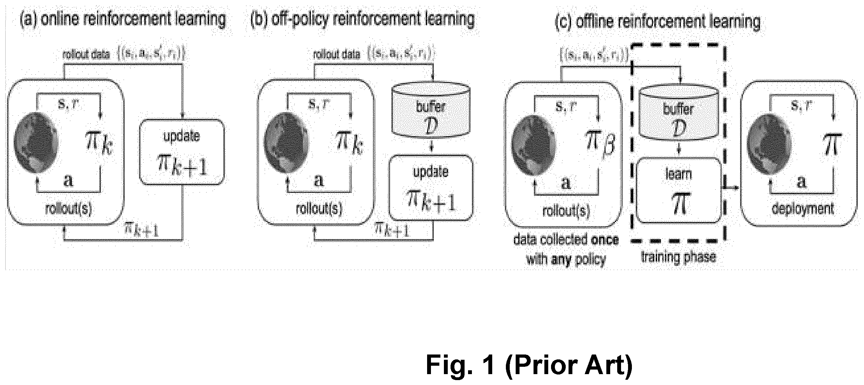

Fig. 1 illustrates the three main training paradigms implemented nowadays by RL-based solutions: (i) online, (ii) off-policy, and (iii) offline training.

The fact that most existing RL algorithms provide a fundamentally online learning paradigm is one of the biggest challenges to their widespread adoption. The process of RL involves collecting experiences in an iterative manner by interacting with the environment, and by applying the most recently learned policy [12]. In many settings, this sort of online interaction is not practical, either because data collection is expensive (e.g., in robotics) or dangerous (e.g., communication networks, autonomous driving, healthcare). A similar effect occurs with off-policy methods, which require to stochastically select and apply new actions that may be potentially poor or unsafe for the target environment. Furthermore, even in domains where online interaction is feasible, it might be instead preferred to utilize previously collected data, for example, if the domain is complex and effective generalization requires large datasets.

The successful application of ML methods across a range of relevant problems has been largely attributed to the advent of scalable data-driven learning methods, such as RL, which improve as they are trained with larger volumes of data. However, online RL is difficult to reconcile with this paradigm. This was less of an issue when RL methods used low-dimensional or linear parametrizations, and therefore relied on small datasets for tractable problems that were easy to simulate [13]. However, with the incorporation of deep neural networks, it became less evident whether the same kind of data-driven learning can be used with RL objectives, resulting in data-driven RL that uses only previously collected data at offline, without any additional online interaction [14, 15].

Offline Deep Reinforcement Learning

In offline RL, a static dataset is collected and is used to train an agent for a given environment. Popular Actor-Critic algorithms, such as Soft Actor Critic (SAC) [20], tend to perform poorly on learning from offline datasets, because they are unable to generalize to out-of-distribution (OOD) data due to an overestimation bias: where the critic overestimates the values of state-action pairs not previously encountered from the collected data which leads to a brittle policy.

The convergence properties of value functions have been demonstrated in simple problem settings [21]. However, the task of learning a policy, using previously learned value functions, remains an active challenge in offline RL. Simple algorithms, such as fitted Q-iterations, have been able to learn state-action value functions, but do not work well with sub-optimal data [22, 23]. To help solve the generalization and extrapolation problem, different offline RL algorithms have proposed to use constrained policy optimization between the target policy and the behavior policy that was used to collect the data, such as using KL-divergence [24, 25], MMD [27] or f-divergence [29]. Some other algorithms have proposed learning a state-conditioned VAEs to minimize the extrapolation error [31, 27, 32]. Recent work by Buckman et al. [33] investigated using worst-case analysis to train a policy, denoted as pessimism. Conservative Q-Learning (CQL) explicitly deals with the problem of overestimation for OOD state-action distribution by pushing down the value of randomly sampled state-action distributions in the critic objective [35]. Learning a dynamics model from offline data has been promising (i.e., model-based RL methods) [36, 37].

In some application domains, the lack of effective offline RL methods has pushed research in a number of promising directions. For example, in robotics and autonomous driving, a rapidly growing research topic is the study of simulation to real-world transfer: training policies with RL in simulation and then transferring these policies into the real world [17, 18, 19]. Although this approach is pragmatic, and often effective, its popularity underlines the deficiency in offline RL methods: if it was possible to train policies with previously collected data, it would likely be unnecessary in many cases to manually design high-fidelity simulators for real-world transfer. Outside of RL (e.g., computer vision, NLP, speech recognition), transfer from simulation is comparatively much less prevalent, since data-driven learning is quite effective.

Multi-agent Reinforcement Learning

Traditional single-agent RL implementations often have limited application to complex real-world environments including heterogeneous elements (e.g., communication networks). Single-agent RL algorithms need to collect the state information in centralized entities, which often requires aggregating high-dimensional data from sensors distributed along the environment. This often introduces much latency in the decision-making process, which makes single-agent solutions impractical for time-critical tasks in complex large-scale environments (e.g., handover control in cellular networks).

Multi-agent RL (MARL) algorithms aim to tackle this limitation by providing solutions that can be deployed and executed in a distributed manner, thus endowing the system with better scalability properties [41]. In the networking context, it also enables the deployment of distributed agents on the edge, thus achieving faster control loops and avoiding single points of failure.

In MARL systems, the action space is defined as the joint of the individual action spaces of agents, which may have partial or full observations of the environment. Agents may control different element types (e.g., mobile devices, base transceiver stations), and can operate either *independently* - based on local reward functions -, or *cooperatively*- when they share common reward functions to pursue a global optimization goal.

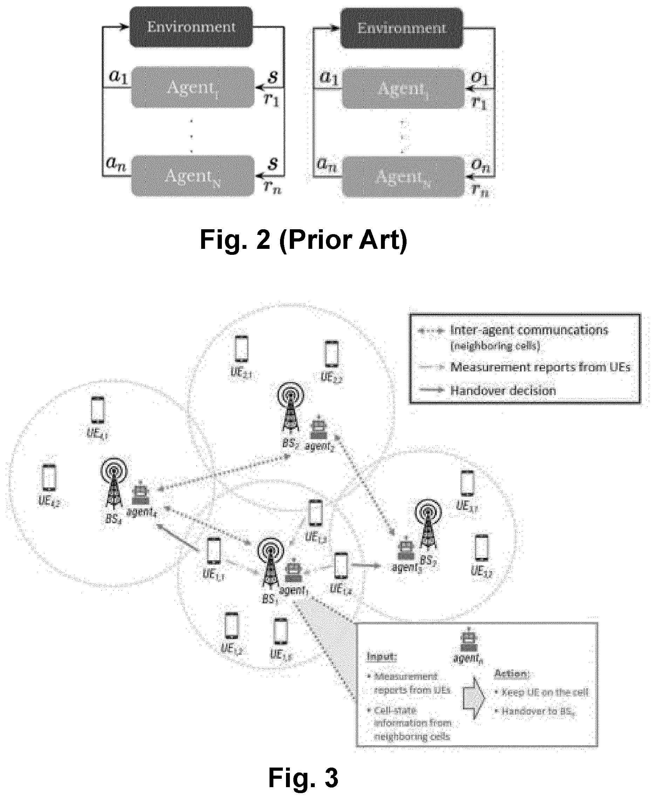

In cooperative MARL algorithms, agents seek to collaborate to optimize a global long-term reward. The environment is affected by the joint action of the agents, and agents receive a reward signal as a result of the collective operation of all the agents. In other words, the reward is no longer a function that depends on the individual actions of the agent, but on the combined actions of all agents. Hence, maximizing the long-term reward requires considering the effect of other agents' actions. Fig. 2 illustrates two main mathematical frameworks considered by MARL Settings [42], both extended from the classic MDP formulation for single-agent RL algorithms.

Markov Games [43] extend the classical MDP formulation to consider the operation of multiple agents within the environment. It is the most straightforward extension of MDP to multi-agent settings. Each agent seeks to find the optimal policy that maximizes its long-term return, and all agents have full observation of the environment state. This usually requires a centralized entity that can collect all the state information and distribute it over all agents.

In most real-world problems agents have no access to all the state information of the environment, or it is very costly and time-consuming to acquire. For example, communication networks have been traditionally built on protocol stacks that rely on distributed control planes (i.e., distributed control capabilities on forwarding devices), and these elements jointly seek to optimize the overall network performance based on their local view. This has enabled the Internet to scale to a planetary size. In this context, Dec-POMDP [44] considers the problem of cooperative decision making under a partial observation of the environment. It is a generalization of the Partially Observable MDP (POMDP) formulation to the multi-agent setting. In Dec-POMDP, agents have only a partial view of the state (e.g., information from their nearest sensors in the environment), and they must make decisions under some uncertainty on the global state. Agents can either have a common reward (for fully-cooperative settings), or local rewards (for fully-competitive settings).

So far, a number of MARL algorithms applied to different automated control and decision-making problems are known, for example, QD-learning [45], MADQN [46], DDRQN [47], MADDPG [48], or PS-TRPO [49]. Nevertheless, the recent history of MARL algorithms has exposed the need for creating customized solutions tailored to specific problems.

In the context of the present invention, the open challenge of designing distributed multi-agent RL solutions that can efficiently operate in cellular network environments with heterogeneous elements and multiple optimization goals is addressed. This requires research on several key aspects, such as designing algorithmic cooperation mechanisms than can effectively help agents jointly optimize multiple objectives (i.e., altruistic agents), or designing neural network architectures that can accurately approximate the optimal agents' policies in the target problems.

Reinforcement learning for automatic network optimization

RL has recently attracted much interest among the networking community. As such, it has been broadly explored for a plethora of classical network-related problems [50]. Moreover, handover management is a pivotal aspect in cellular networks, as a reference [51] compiles an overview of RL-based algorithms proposed for 5G networks. Below the most relevant works to the present invention are described.

In [52] and [53] the authors propose a MARL framework respectively applied to user association, and handover optimization in cellular networks. In these works, agents are deployed on User Equipment (UE), and their objective is to optimize the total network sum-rate. Agents act independently, they do not exchange any state information between them, and they make decisions based on their local observations. Other works consider the case of multi-objective optimization. For example, in [54] the authors propose ORLA, an online RL algorithm applied to user association in vehicular networks. Agents are deployed in cells, and they seek to maximize the users' service rate while minimizing the variance across users. Agents collect historical information of user associations in their own cells, but they do not exchange state information between them. In [55] the authors follow a similar approach for handover optimization in dense mmWave networks. They propose to distribute agents on UEs, and agents seek to jointly optimize cell-user associations and the beamforming configuration in MIMO antennas. [56] proposes a multi-agent DQN-based framework for user association and power control in heterogeneous networks. Agents are deployed on UEs and they aim to optimize energy efficiency on UEs (i.e., ratio between throughput and power consumption). Likewise, [57] uses a multi-agent Proximal Policy Optimization (PPO) algorithm to maximize the overall throughput while reducing the handover frequency between cells. Agents are deployed on UEs, and they jointly optimize handovers and power allocation. Lastly, [58] proposes a novel method based on RL and Graph Attention Networks (GAT) [59]. In contrast to the previous works, here the authors propose a multi-agent system where agents are deployed in base transceiver stations and exchange information between them. Particularly, this system is applied to distributed slicing resource management in dense cellular networks.

There are known some patents and patent application in this field.

WO2012045337A1 discloses measures for handover-related mobility optimization in cellular communication systems, said measures exemplarily comprising acquiring a location of a terminal with respect to a base station of a cellular communication system, and setting handover-related mobility parameters in a terminal-specific manner depending on the acquired location of the terminal with respect to the base station. Said mobility parameters are applied for handover applied mobility optimization in cellular communication systems based on a LTE, a LTE-Advanced, an UMTS, a GERAN a UTRAN radio access system.

CN102638831B discloses a handover parameter optimization method. According to a measurement value reported by user equipment (UE), a network side obtains a cumulative density function CDF (i) of corresponding measured values of a cell handover region, and according to the area of a region enclosed by the cumulative density function curve CDF (i) of corresponding measured values of the cell handover region and a threshold value curve RLFthrd (i) of the measured values, the network side determines the degree of the cell fault when the cell has mobility fault; and according to the fault degree of the cell, the network side revises corresponding handover parameters so as to decrease the area of the region enclosed by the curve RLFthrd (i) and the curve CDF (i). This patent further discloses a handover parameter optimization system correspondingly. On the basis of the statistic result reported by the UE, the parameters needed to be revised and the revision degree of the parameters are determined, thus the optimization speed can be increased, and simultaneously the self-optimization performance can also be improved.

US10952119 discloses that a base station of the cellular network receives a history of wireless access of a user device. When the history indicates that the user device is a mobile device, the base station commands the user device to perform a mobility measurement. When the history indicates that the user device is a stationary device, the base station commands the user device to bypass the mobility measurement. The user device is determined to be a mobile device when the history indicates that the user device is wirelessly connected with at least two different base stations within a threshold period of time. The user device is determined to be a stationary device when the history indicates that the user device is connected with the base station and no other base station within a threshold period of time.

WO2010002926 provides a method for wireless communications. The method includes determining a set of handover parameters that facilitate a handover between cells in a wireless network and analyzing the set of handover parameters. The method includes dynamically adjusting the parameters to mitigate handover failures between the cells.

In the prior art, a RL agent is trained to take actions given the observation (state) of the environment with the objective of receiving the maximum discounted cumulative rewards. Since in principle the reward schema can be designed at will, RL allows to create models that can serve multiple objectives, e.g., reducing latency, increasing throughput, and so on. There are two classes of RL methods: model-free RL algorithms and model-based RL algorithms.

Model-free RL algorithms need to interact with the environment to observe the feedback and then optimize the policy. Doing this in an online fashion is unfeasible in production networks, as this would require deploying under-trained policies that might break the correct operation of the network, which could result in dramatic costs for the operator. A typical solution is learning off-policy from logged data. However, this poses the following challenges for applying RL-based methods:

(1) Pure off-policy settings. The policy should be learned from fixed logged data without interactions with the environment. Hence the data from which the RL agent is trained (i.e., logged data) will not match its policy. [10] proposed to use propensity scores to perform off-policy correction, but this kind of methods can suffer from unbounded high variances [34].

(2) Lack of data and negative rewards. RL algorithms are data hungry; traditional techniques overcome this by either simulating the environments or by running RL iterations in controlled environments (e.g., games, robots). This is challenging in the case of settings with large action spaces. Moreover, in most cases learning happens from implicit feedback. In other words, simply regressing to the Bellman equation [1] (i.e., Q-learning) wouldn't lead to good performance when there is no negative feedback, since the model will be biased towards positive feedback.

An alternative to off-policy training is the use of model-based RL algorithms. In model-based RL, one first builds a model to simulate the environment. Then the agent can learn by interactions with the simulated environment [9, 40]. These two-stage methods heavily depend on the constructed simulator. Although related methods like generative adversarial networks (GANs) [16] achieve good performance when generating images, simulating the behavior of real-world cellular networks is a much more complex task.

On the contrary, the present invention defines a formalism of an optimal strategy for dealing with multi-objective and complex problems, by means of a Multi-Objective Deep Reinforcement Learning (MORL) framework. This framework addresses theoretical and algorithmic impasses that single-objective methods cannot, such as, for example, (i) a priori and uncertain decisions made about the desired trade-offs between objectives, (ii) not considering multiple objectives or collapsing the objectives to a single scalar reward, (iii) limited ability to discover multiple policies so as to rapidly adapt to changing preferences, (iv) solutions which fail to maximize the utility function(s) of interest.

Furthermore, edge AI devices need to reach decisions that are not only meaningful but also fair. While most decision problems have multiple objectives, most algorithms dealing with agents that need to interact with decision problems focus on optimizing a single objective [3]. Also, considering the competitive nature of many problems, the objectives are usually affected by other agents, which increases the uncertainties associated with the decision-making process. In many applications it is important to ensure that the actions of an agent are fair with regard to multiple stakeholders. Multi-objective approaches to fairness have been explored at an abstract level [4], and also within specific applications [5,6]. However, objectives are not agents - some works cast single-agent multi-objective problems as multi-agent problems, with each agent representing a competing objective [7,8]; then, either through voting rules or (Nash) equilibria a policy is selected. Also, objectives do not typically correspond to the interests of single agents, as agents will care about multiple objectives. Hence, altruistic agents may see the interests of other agents as objectives, and therefore aim to come up with fair solutions. As such, the present invention considers varying levels of altruism in a multi-agent environment, which can be defined by combining local and global-level components within the reward function.

Finally, contrary to existing applications of RL for network optimization [52,53,54,55,56,57,58], in the present invention RL-based agents are deployed on base transceiver stations (cells), and there is an information exchange with neighboring agents to enhance cooperation between them and optimize handover decisions. Agents not only receive rewards resulting from the joint action of all the other agents, but also receive state information that can help successful cooperation between them. Moreover, the proposed method supports joint optimization of multiple objectives (e.g., throughput, latency, energy cost). Moreover, present invention relies on a fully offline training method, which is crucial to produce practical data-driven solutions for networking. As a result, it does not require testing actions that are randomly sampled or selected by under-trained policies, as it happens in most existing RL-based solutions based on online/off-policy training.

**References**

[1] Li, L. et al., A Measurement Study on TCP Behaviors in HSPA+ Networks on High- speed Rails, INFOCOM, 2015
[2] 3GPP. 2011. TS23.009: Handover Procedures.
[3] Sutton et al., Reinforcement learning: An introduction, MIT press, 2018.
[4] Siddique et al., Learning fair policies in multiobjective (deep) reinforcement learning with average and discounted rewards, ICML, 2020.
[5] Hu et al., Dynamic beam hopping method based on multi-objective deep reinforcement learning for next-generation satellite broadband systems, IEEE ToB, 2020.
[6] Perez et al., Multi-objective reinforcement learning for responsive grids, Journal of Grid Computing, 2010.
[7] Li et al., Urban driving with multi-objective deep reinforcement learning, AAMAS, 2019.
[8] Méndez-Hernández et al., A multi-objective reinforcement learning algorithm for jssp,ICANN 2019.
[9] Xinshi Chen, Shuang Li, Hui Li, Shaohua Jiang, Yuan Qi, and Le Song. 2019. Generative Adversarial User Model for Reinforcement Learning Based Recommendation System. In International Conference on Machine Learning. 1052-1061.
[10] Minmin Chen, Alex Beutel, Paul Covington, SagarJain, Francois Belletti, and Ed H Chi. 2019. Top-k off-policy correction for a REINFORCE recommender system. In Proceedings of the Twelfth ACM International Conference on Web Search and Data Mining. ACM, 456-464.
[11] Scott Fujimoto, David Meger, and Doina Precup. 2019. Off-policy deep reinforcement learning without exploration. In International Conference on Machine Learning. 2052-2062.
[12] Sutton, R. S. and Barto, A. G. (1998). Introduction to Reinforcement Learning. MIT Press, Cambridge, MA, USA, 1st edition.
[13] Lange, S., Gabel, T., and Riedmiller, M. (2012). Batch reinforcement learning. In Reinforcement Learning, pages 45-73. Springer.
[14] Kumar, A. (2019). Data-driven deep reinforcement learning. https://bair.berkeley.edu/ blog/2019/12/05/bear/. BAIR Blog.
[15] Fu, J., Kumar, A., Nachum, O., Tucker, G., and Levine, S. (2020). D4rl: Datasets for deep data-driven reinforcement learning. In arXiv.
[16] Ian Goodfellow, Jean Pouget-Abadie, Mehdi Mirza, Bing Xu, David Warde-Farley, Sherjil Ozair, Aaron Courville, and Yoshua Bengio. 2014. Generative adversarial nets. In Advances in neural information processing systems 2672-2680.
[17] Sadeghi, F. and Levine, S. (2017). CAD2RL: Real single-image flight without a single real image. In Robotics: Science and Systems.
[18] Tan, J., Zhang, T., Coumans, E., Iscen, A., Bai, Y., Hafner, D., Bohez, S., and Vanhoucke, V. (2018). Sim-to-real: Learning agile locomotion for quadruped robots. arXiv preprint arXiv: 1804.10332.
[19] Chebotar, Y., Handa, A., Makoviychuk, V., Macklin, M., Issac, J., Ratliff, N., and Fox, D. (2019). Closing the sim-to-real loop: Adapting simulation randomization with real world experience. In 2019 International Conference on Robotics and Automation (ICRA), pages 8973-8979. IEEE.
[20] T. Haarnoja, A. Zhou, P. Abbeel, and S. Levine. Soft actor-critic: Off-policy maximum entropy deep reinforcement learning with a stochastic actor. arXiv preprint arXiv:1801.01290, 2018.
[21] D. Ormoneit and S'. Sen. Kernel-based reinforcement learning. Machine Learning, 49(2):161-178, 2002.
[22] D. Ernst, P. Geurts, and L. Wehenkel. Tree-based batch mode reinforcement learning. Journal of Machine Learning Research, 6:503-556, 2005.
[23] M. Riedmiller. Neural fitted q iteration-first experiences with a data efficient neural reinforcement learning method. In European Conference on Machine Learning, pages 317-328. Springer, 2005.
[24] Y. Wu, G. Tucker, and O. Nachum. Behavior regularized offline reinforcement learning. arXiv preprint arXiv: 1911.11361, 2019.
[25] N. Jaques, A. Ghandeharioun, J. H. Shen, C. Ferguson, A. Lapedriza, N. Jones, S. Gu, and R. Picard. Way off-policy batch deep reinforcement learning of implicit human preferences in dialog. arXiv preprint arXiv:1907.00456, 2019.
[26] Jens Kober, J Andrew Bagnell, and Jan Peters. 2013. Reinforcement learning in robotics: A survey. The International Journal of Robotics Research 32, 11 (2013), 1238-1274.
[27] A. Kumar, J. Fu, G. Tucker, and S. Levine. Stabilizing off-policy q-learning via bootstrapping error reduction. arXiv preprint arXiv:1906.00949, 2019.
[28] Yougang Lyu, Zihan Wang, Zhaochun Ren, Pengjie Ren, Zhumin Chen, Xiaozhong Liu, Yujun Li, Hongsong Li, and Hongye Song. 2022. Improving legal judgment prediction through reinforced criminal element extraction.

Information Processing & Management 59, 1 (2022), 102780.

[29] S. Sinha, J. Song, A. Garg, and S. Ermon. Experience replay with likelihood-free importance weights. arXiv preprint arXiv:2006.13169, 2020.

[30] Volodymyr Mnih, Koray Kavukcuoglu, David Silver, Andrei A Rusu, Joel Veness, Marc G Bellemare, Alex Graves, Martin Riedmiller, Andreas K Fidjeland, Georg Ostrovski, et al. 2015. Human-level control through deep reinforcement learning. Nature 518, 7540 (2015), 529.

[31] S. Fujimoto, D. Meger, and D. Precup. Off-policy deep reinforcement learning without exploration. In International Conference on Machine Learning, pages 2052-2062. PMLR, 2019.

[32] A. Ajay, A. Kumar, P. Agrawal, S. Levine, and O. Nachum. Opal: Offline primitive discovery for accelerating offline reinforcement learning. arXiv preprint arXiv:2010.13611, 2020.

[33] J. Buckman, C. Gelada, and M. G. Bellemare. The importance of pessimism in fixed-dataset policy optimization. arXiv preprint arXiv:2009.06799, 2020.

[34] Rémi Munos, Tom Stepleton, Anna Harutyunyan, and Marc Bellemare. 2016. Safe and efficient off-policy reinforcement learning. In Advances in Neural Information Processing Systems. 1054-1062.

[35] A. Kumar, A. Zhou, G. Tucker, and S. Levine. Conservative q-learning for offline reinforcement learning. arXiv preprint arXiv:200604779, 2020.

[36] T. Yu, G. Thomas, L. Yu, S. Ermon, J. Zou, S. Levine, C. Finn, and T. Ma. Mopo: Model-based offline policy optimization. arXiv preprint arXiv:2005.13239, 2020.

[37] R. Kidambi, A. Rajeswaran, P. Netrapalli, and T. Joachims. Morel: Model-based offline reinforcement learning. arXiv preprint arXiv:2005.05951, 2020.

[38] David Silver, Aja Huang, Chris J Maddison, Arthur Guez, Laurent Sifre, George Van Den Driessche, Julian Schrittwieser, Ioannis Antonoglou, Veda Panneershel- vam, Marc Lanctot, et al. 2016. Mastering the game of Go with deep neural networks and tree search. nature 529, 7587 (2016), 484.

[39] Aravind Srinivas, Michael Laskin, and Pieter Abbeel. 2020. Curl: Contrastive unsupervised representations for reinforcement learning. arXiv preprint arXiv:2004.04136 (2020).

[40] Jing-Cheng Shi, Yang Yu, Qing Da, Shi-Yong Chen, and An-Xiang Zeng. 2019. Virtual-taobao: Virtualizing real-world online retail environment for reinforce- ment learning. In Proceedings of the AAAI Conference on Artificial Intelligence, Vol. 33. 4902-4909.

[41] Canese, Lorenzo, et al. "Multi-agent reinforcement learning: A review of challenges and applications." Applied Sciences 11.11 (2021): 4948.

[42] Feriani, Amal, and Ekram Hossain. "Single and multi-agent deep reinforcement learning for AI-enabled wireless networks: A tutorial." IEEE Communications Surveys & Tutorials 23.2 (2021): 1226-1252.

[43] M. L. Littman, "Markov games as a framework for multi-agent reinforcement learning," in Machine learning proceedings 1994, pp. 157-163, Elsevier, 1994.

[44] F. A. Oliehoek, C. Amato, et al., A concise introduction to decentralized POMDPs, vol. 1. Springer, 2016.

[45] Kar, S.; Moura, J.M.F.; Poor, H.V. QD-Learning: A Collaborative Distributed Strategy for Multi-Agent Reinforcement Learning Through Consensus + Innovations. IEEE Trans. Signal Process. 2013, 61, 1848-1862.

[46] Foerster, J.; Nardelli, N.; Farquhar, G.; Torr, P.; Kohli, P.; Whiteson, S. Stabilising Experience Replay for Deep Multi-Agent Reinforcement Learning. In Proceedings of the 34th International Conference on Machine Learning, Sydney, Australia, 6-11 August 2017.

[47] Foerster, J.N.; Assael, Y.M.; de Freitas, N.; Whiteson, S. Learning to Communicate to Solve Riddles with Deep Distributed Recurrent Q-Networks. arXiv 2016, arXiv:1602.02672.

[48] R. Lowe, Y. I. Wu, A. Tamar, J. Harb, O. P. Abbeel, and I. Mordatch, "Multi-agent actor-critic for mixed cooperative-competitive environments," in Advances in neural information processing systems, pp. 6379-6390, 2017.

[49] Gupta, J.K.; Egorov, M.; Kochenderfer, M. Cooperative Multi-agent Control Using Deep Reinforcement Learning. In Proceedings of the International Conference on Autonomous Agents and Multiagent Systems, São Paulo, Brazil, 8-12 May 2017; Volume 10642.

[50] Luong, Nguyen Cong, et al. "Applications of deep reinforcement learning in communications and networking: A survey." IEEE Communications Surveys & Tutorials 21.4 (2019): 3133-3174.

[51] Tanveer, Jawad, et al. "An overview of reinforcement learning algorithms for handover management in 5G ultra-dense small cell networks." Applied Sciences 12.1 (2022): 426.

[53] Sana, Mohamed, et al. "Multi-agent reinforcement learning for adaptive user association in dynamic mmWave networks." IEEE Transactions on Wireless Communications 19.10 (2020): 6520-6534.

[53] Sana, Mohamed, et al. "Multi-agent deep reinforcement learning for distributed handover management in dense mmWave networks." ICASSP 2020-2020 IEEE International Conference on Acoustics, Speech and Signal Processing (ICASSP), 2020.

[54] Li, Zhong, Cheng Wang, and Chang-Jun Jiang. "User association for load balancing in vehicular networks: An online reinforcement learning approach." IEEE Transactions on Intelligent Transportation Systems 18.8 (2017):

2217-2228.

[55] Dinh, Thi Ha Ly, et al. "Deep reinforcement learning-based user association in sub6ghz/mmwave integrated networks." 2021 IEEE CCNC.

[56] Ding, Hui, et al. "A deep reinforcement learning for user association and power control in heterogeneous networks." Ad Hoc Networks 102 (2020): 102069.

[57] Guo, Delin, et al. "Joint optimization of handover control and power allocation based on multi-agent deep reinforcement learning." IEEE Transactions on Vehicular Technology 69.11 (2020): 13124-13138.

[58] Shao, Yan, et al. "Graph attention network-based multi-agent reinforcement learning for slicing resource management in dense cellular network." IEEE Transactions on Vehicular Technology 70.10 (2021): 10792-10803.

[59] Velickovic, Petar, et al. "Graph attention networks." arXiv preprint arXiv:1710.10903 (2017).

[60] Levine, S., Kumar, A., Tucker, G., & Fu, J. (2020). Offline Reinforcement Learning: Tutorial, Review, and Perspectives on Open Problems. ArXiv, abs/2005.01643.

[61] Gilmer, Justin, et al. "Message passing neural networks." Machine learning meets quantum physics. Springer, Cham, 2020. 199-214.

[62] J. Suárez-Varela, et al. "Graph Neural Networks for Communication Networks: Context, Use Cases and Opportunities." IEEE Network (2022).

## Description of the Invention

Present invention proposes, according to one aspect, a method for efficient and distributed network optimization of a cellular network, the cellular network being distributed in different cells where each cell comprises a base transceiver station providing network coverage to a plurality of computing devices of the cellular network, each computing device being associated to a user, the method comprising: a) associating a computing agent to each base transceiver station, each computing agent being able to communicate with computing agents of its neighboring cells; b) receiving, by a given computing agent, from at least one given computing device connected to its associated base transceiver station, signal strength information of the given computing device, the signal strength information being measured on the given computing device for the associated base transceiver station and for neighboring cells; c) determining, by the given computing agent, a handover decision for said given computing device by means of executing a reinforced learning decision-making algorithm on an established trained policy and on the received signal strength.

Modern cellular networks (e.g., 4G-LTE, 5G-NR) devise two different handover types: Idle-state handover, which is done by the computing device, when it has no active connection to the serving base transceiver station (this mechanism enables computing devices to access the network at any time); and Active-state handover, which is initiated by the serving base transceiver station, when the computing device has established the radio connection and there is ongoing data-plane traffic. Computing devices continuously monitor the signal strength (e.g., RSRP, RSRQ, SINR) of the serving cell and of other neighboring cells. When some specific events occur (e.g., it detects higher RSRP from a neighboring cell), they send a measurement report to the serving base transceiver station. Then, the base transceiver station may decide whether to make a handover to a neighboring cell or not. Particularly, the present invention focuses on optimizing active-state handovers - where base transceiver stations participate in the handover decision process - thus cell-based computing agents take the control of handover decisions on the cell where they are deployed.

In some embodiments, the receiving step b) further comprises b1) receiving statistics about past traffic activity of the given computing device, including traffic volume in a given time period, the received statistics being used by the reinforced learning decision-making algorithm.

In some embodiments, the receiving step b) further comprises b2) receiving cell state information from its neighboring cells, the cell state information including one or more of the following: statistics of traffic/user load on the cell, historical handover rate, aggregated cell-level quality indicators including throughput, latency, and/or packet loss, the received cell state information being used by the reinforced learning decision-making algorithm.

In some embodiments, if the handover decision determines that the given computing device is to be handover to a target base transceiver station, the method further comprises sending a handover request to the target base transceiver station according to a cellular network protocol.

In some embodiments, the trained policy is established by the given computing agent using historical records of handover activity in the cellular network.

In some embodiments, the trained policy is established in an offline manner.

In some embodiments, the handover activity comprises a log of handover events including an identifier of the cell serving the handover, a target cell and the computing device that undergoes the handover.

In some embodiments, steps b) and c) are performed by each one of a group of computing agents, the method further comprising sharing, by each computing agent of the group, the determined handover decision; learning, by the group of computing agents, in cooperation, how to optimize handover decisions based on a local state of the network and on information received from neighboring cells, establishing an optimized handover decision as a result; and determining, by the group of computing agents, in cooperation, a single network optimization handover policy using one or more neural networks on the established optimized handover decision.

Present invention also proposes, according to another aspect, a system for efficient and distributed network optimization of a cellular network, comprising a plurality of base transceiver stations, each base transceiver station being configured to provide coverage to a cell of the cellular network; a plurality of computing devices configured to connect to the plurality of base transceiver stations, each computing device being associated to a user; and a plurality of computing agents, each computing agent being configured to be associated to a base transceiver station and comprising a memory and one or more processing units to receive, from at least one given computing device connected to its associated base transceiver station, signal strength information of the given computing device, the signal strength information being measured on the given computing device for the associated base transceiver station and for neighboring cells, and to determine a handover decision for said given computing device by means of executing a reinforced learning decision-making algorithm on an established trained policy and on the received signal strength.

Yet another aspect of the present invention proposes a device for efficient and distributed network optimization of a cellular network, the device being associated to a given base transceiver station of a cellular network, which is distributed into different cells where each cell comprises a base transceiver station providing coverage to a plurality of computing devices, each one being associated to a user, the device comprising a memory and one or more processing units to receive, from at least one given computing device connected to its associated base transceiver station, signal strength information of the given computing device, the signal strength information being measured on the given computing device for the associated base transceiver station and for neighboring cells, and to determine a handover decision for said given computing device by means of executing a reinforced learning decision-making algorithm on an established trained policy and on the received signal strength.

In some embodiments, the one or more processing units are further configured to receive statistics about past traffic activity of the given computing device, including traffic volume in a given time period, the received statistics being also used by the reinforced learning decision-making algorithm.

In some embodiments, the one or more processing units are further configured to receive cell state information from its neighboring cells, the cell state information including one or more of the following: statistics of traffic/user load on the cell, historical handover rate, aggregated cell-level quality indicators including throughput, latency, and/or packet loss, the received cell state information being used by the reinforced learning decision-making algorithm.

In some embodiments, the device is configured to establish the trained policy while being offline.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, present invention proposes a solution for the time-critical and geo-distributed task of handover optimization that leverages an advanced multi-objective multi-agent Deep Reinforcement Learning (DRL) system for efficient, distributed, and real-time handover optimization on the network edge (i.e., in cells).

Some of the advantages of present invention are:

- Improved performance on handovers leveraging cutting-edge AI-based optimization techniques (Multi-Agent Reinforcement Learning and Deep Neural Networks).
- Device-level: it makes handover decisions on devices considering their active traffic sessions and the requirements of the application currently running on the device (i.e., QoE-aware optimization).
- Multi-objective: it jointly optimizes multiple critical factors when optimizing handovers (e.g., handover latency, impact on the device's performance, impact on the global cell's performance).
- Offline training: It enables safe deployment in production networks. Offline training allows deploying AI-based agents in the network and (re)train them offline on premises based on past experiences, without jeopardizing the correct behavior of the network. In contrast, existing online/off-policy RL methods require to test random and/or sub-optimal actions directly in the network during the training process.
- Distributed execution: The invention drops the assumption that AI systems need to be trained and executed in a centralized manner and define a setting that allows the use of Multi-Processor Systems-on-Chip (MPSoCs) that integrate multiple general-purpose CPUs, GPUs, hardwired accelerators and programmable engines in the form of Field-Programmable Gate Arrays (FPGAs). FPGA are re-programmable circuits that allow low-level hardware implementations of well-used algorithms with the added advantage of low operational cost, performance acceleration and the possibility of operation on the edge, thus taking some burden off the cloud. The proposed multi-agent solution, which is premised on this view, proposes a lightweight approach that can be executed in a distributed manner, by building efficiently compact data and RL model summaries.

## Brief Description of the Drawings

The previous and other advantages and features will be more fully understood from the following detailed description of embodiments, with reference to the attached figures, which must be considered in an illustrative and non-limiting manner, in which:

Fig. 1 illustrates a classic online reinforcement learning (extracted from [60]) where: (a), classic off-policy reinforcement learning (b), and offline reinforcement learning (c). In online reinforcement learning (a), the policy $\pi\_\kappa$ is updated with streaming data collected by $\pi\_\kappa$. In the classic off-policy setting (b), the agent's experience is appended to a data buffer (also known as replay buffer) D, and each new policy $\pi\_\kappa$ collects additional data, such that D consists of samples from $\pi\_0,\pi\_1...,\pi\_\kappa$, and all of this data is used to train an updated policy $\pi\_(\kappa+1)$. In contrast, offline reinforcement learning employs a dataset D collected by some (periodically) behaviour policy $\pi\_\beta$. The dataset is collected once, and is not changed during training, which makes it possible to use large previous collected datasets. The training process does not interact with the Markov Decision Process (MDP) at all, and the policy is only deployed after being fully trained.

Fig. 2 illustrates a classic multi-agent settings (extracted from [41]). Left - Markov Games; Right - Decentralized Partially Observable Markov Decision Process (Dec-POMDP).

Fig. 3 is a schematic representation of the proposed system, according to an embodiment.

Fig. 4 is a workflow of the proposed method from the perspective of a given computing agent, according to an embodiment of the present invention.

Fig. 5 illustrates a state transition before and after a handover is made in the network. The invention leverages monitoring data to capture and store the evolution of the network state when a handover occurs. This data is then used to train computing agents offline.

## Detailed Description of the invention and of Preferred Embodiments

Present invention provides a novel multi-agent multi-objective RL-based solution for handover optimization in cellular network environments. Fig. 3 illustrates the general architecture of the present invention.

As seen in Fig. 3, a set of computing agents (or RL agents) are deployed in a distributed manner on base transceiver stations BSs (i.e., cells). Each computing agent can make handover decisions on UEs (i.e., user computing devices) associated with the agent's cell - computing agents thus can decide whether to keep the computing device associated with the current cell or perform a handover to a specific neighboring cell. The fact that it is a distributed system makes it inherently more scalable and fault-tolerant than logically centralized solutions, while at the same time it enables real-time operation at the edge - decisions are directly made on base transceiver stations with minimum latency. Additionally, by dropping the assumption that AI systems need to be trained and executed in a centralized manner, the invention creates the conditions for using Multi-Processor Systems-on-Chip (MPSoCs) that integrate multiple general-purpose CPUs, GPUs, hardwired accelerators and programmable engines in the form of Field-Programmable Gate Arrays (FPGAs). FPGA are re-programmable circuits that allow low-level hardware implementations of well-used algorithms with the added advantage of low operational cost, performance acceleration and the possibility of operation on the edge, thus taking some burden off the cloud. The proposed multi-agent solution, which is premised on this view, proposes a lightweight approach that can be executed in a distributed manner, by building efficiently compact data and RL model summaries.

Emerging applications in the (Beyond) 5G ecosystem will require to accurately account for multiple performance factors, such as ultra-high throughput, ultra-low latency, and/or extremely high reliability. As such, present invention seeks to jointly optimize several Key Performance Indicators (KPI) considering the application-level requirements. Based on the traffic generated by computing devices, agents make QoE-aware handover decisions that involve solving a complex multi-objective optimization problem.

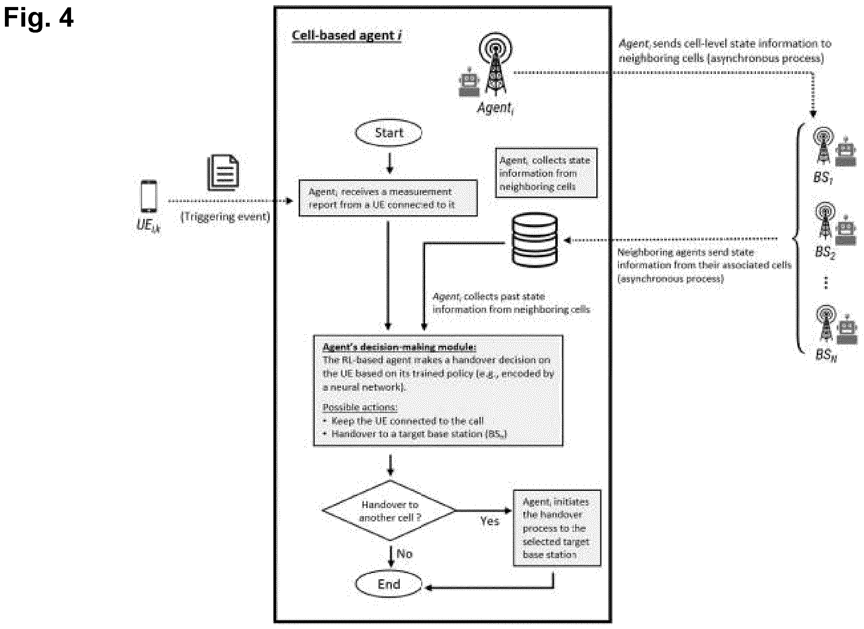

Regarding now to Fig. 4, therein an embodiment of the workflow of the present invention is illustrated from the perspective of a generic computing agent. Note that all computing agents can run the same workflow in parallel in their own cells. The execution pipeline starts when a computing agent - deployed in a base transceiver station BS- receives a measurement report from a computing device UE associated with it. This measurement report contains signal strength information (e.g., RSRP, RSRQ, SINR) measured on the computing device for the associated cell and for neighboring cells. The computing agent processes the received information and uses it as input to its decision-making module/algorithm. This input information may optionally include statistics about the past traffic activity of the computing device (e.g.,

traffic volume in a given time period). This may help the computing agent infer information about the application type currently running on the computing device, and thus estimate the current quality-of-service requirements of that computing device (e.g., throughput, maximum latency supported).

The computing agent can also collect/receive cell state information from neighboring cells and use it as an additional (optional) input to the decision-making module. This may include, but is not limited to, statistics of traffic/user load on the cell, historic handover rate, aggregated cell-level KPIs (e.g., throughput, latency, packet loss). Note that computing agents can run asynchronously a process where they share cell state information from their own associated cell with neighboring agents, as well as process and store cell state information received from neighboring agents. At this point the computing agent takes the most updated information stored in its historical database.

The computing agent makes a handover decision based on the input information and its currently learned/trained policy. The input data may include information from the computing device measurement report, the computing device's past traffic activity, and cell state information from neighboring cells. The decision can be either keeping the computing device associated with the same cell or performing a handover to a specific target base transceiver station.

In case the decision-making module decides to perform a handover to a target base transceiver station, it makes a handover request to the target base transceiver station according to the cellular network protocol in place (e.g., 4G-LTE, 5G-NR).

Problem formulation: Distributed Multi-Objective Reinforcement Learning

The target optimization can be formulated as a Multi-Objective Markov Decision Process (MOMDP) [x42], in which the computing agent interacts with the environment ε (computing devices) by sequentially recommending handovers to maximize the discounted cumulative rewards. The MOMDP can be defined by tuples of $(\mathcal{S}, \mathcal{A}, \mathbb{P}, \mathbb{R}, \rho_0, y)$, where:

- $\mathcal{S}$ : a continuous state space that describes the computing device's state. The state of the computing device at timestamp t can be defined as $s_t = G(x_{1:t}) \in \mathcal{S}(t > 0)$ , where G is a sequential model discussed later.

- $\mathcal{A}$ : a discrete action space that contains candidate items. The action $a$ of the computing agent is to decide .... In the offline RL setting, the method either extracts the action at timestamp t from the cell-device interaction, i.e., $a_t = x_{t+1}$, or by setting it to a top prediction obtained from the super-supervised layer. The "goodness" of a state-action pair $(s_t, a_t)$ is described by its multi-objective Q-value function $Q(s_t, a_t)$ .

- $\mathbb{P}$ :

$$\mathcal{S} \times \mathcal{A} \times \mathcal{S} \to \mathbb{R}$$

is the state transition probability $p(s_{t+1}|s_t, a_t)$, i.e., a probability of state transition from $s_t$ to $s_{t+1}$ when computing agent takes action $a_t$.

-

$$\mathbb{R}: \ \mathcal{S} \times \mathcal{A} \longmapsto \mathbb{R}^m$$

is the vector-valued reward function (Each component corresponds to one objective), where $r(s, a)$ denotes the immediate reward by taking action $a$ at state s.
- $\rho_0$ is the initial state distribution with $s_0 \sim \rho_0$.
- $\gamma \in [0,1]$ is the discount factor for future rewards. For $\gamma = 0$, the computing agent only considers the immediate reward, while for $\gamma = 1$, all future rewards are regarded fully except the one of the current action.

The goal of the MORL computing agent is to find a solution to a MOMDP in a form of target policy $\pi_\theta(a|s)$ so that sampling trajectories according to $\pi_\theta(a|s)$ would lead to the maximum expected cumulative reward:

$$\max_{\pi_\theta} \mathbb{E}_{\tau \sim \pi_\theta}[f(\mathbb{R}(\tau))], \text{ where } \mathbb{R}(\tau) = \sum_{t=0}^{|\tau|} \gamma^t r(s_t, a_t)$$

Where $f: \mathbb{R}^m \longmapsto \mathbb{R}$ is a scalarization function, while $\theta \in \mathbb{R}^d$ denotes the policy parameters. The expectation is taken over trajectories $\tau = (s_0, a_0, s_1, a_1, ...)$, obtained by performing actions according to the target policy:

$$s_0 \sim \rho_0, a_t \sim \pi_\theta(\cdot | s_t), s_{t+1} \sim \mathbb{P}(\cdot | s_t, \alpha_t) .$$

A scalarization function $f$ can map the multi-objective Q-values $Q(s_t, a_t)$ and a reward function $r(s_t, a_t)$ to a scalar value, i.e., the user utility. Present invention focuses on linear $f$, where each objective i is given an importance, i.e., weight $w_i$, $i = 1,...,m$ such that the scalarization function becomes $f_w(x) = w^T x$, where w = $[w_1,...,w_m]$.

Moreover, present invention can consider a game theory approach to addressing the multi-agent setting. This implies taking as input both the original decision problem (where the computing agents have individual reward functions that are unknown to the other computing agents and the "owner" of the game), as well as a social welfare function. The aim is to design a system of additional payments that would i) force the computing agents to be truthful about their individual utilities, and ii) lead to solutions that are (approximately) optimal under the social welfare function. For the multi-objective setting, the situation is more complex, as the individually received rewards determine the utilities via individual, private utility functions. Nevertheless, it is possible to design mechanisms for some multi-objective multi-agent problems if the individual utilities can be articulated.

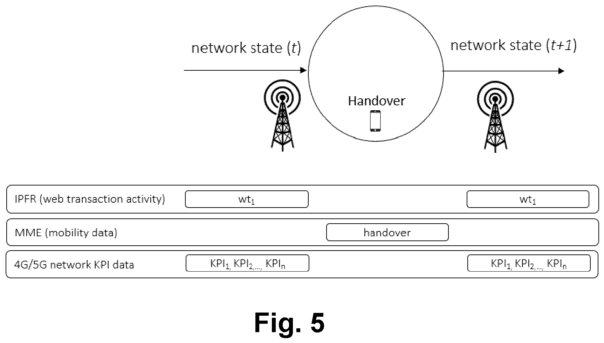

In a particular embodiment, the proposed solution is implemented in an offline training setting. Computing agents have access to historical records of handover activity in the network. With this information, the computing agents can populate an experience replay buffer and use it to (re)train their policy in an offline manner, without the need of testing random or under-trained policies in the network during the training process. Once the learned policy converges to a desired level of performance, computing agents can be updated and start to apply the new policy in the network. Fig. 5 illustrates the process of obtaining the required data for training computing agents.

A monitoring platform can capture the handover events in the network (e.g., in the Mobility Management Entity in LTE-based networks). At the same time, session-level KPIs can be captured before and after the handover process (e.g., throughput, latency, loss). With this information computing agents can compute the performance difference/cost during the handover decisions, and this can be used as a reward function to computing agents.

The reward

$$\mathbb{R} : \mathcal{S} \times \mathcal{A} \longmapsto \mathbb{R}^m$$

is a vector-valued multi-objective function (each component corresponds to one objective), where $r(s,a)$ denotes the immediate reward by taking action $a$ at state s.

As said before, present invention can follow a game theory approach for the multi-agent setting. This implies taking as reward both local (e.g., cell/device-level) and global factors (network-level). For the multi-objective dimension, the invention combines the utility functions of the individual objectives in place into a single reward function (e.g., weighted sum of the utility functions of throughput, QoE, latency, handover costs).

In some embodiments, the proposed method combines two different reward metrics (local and global) in a linear manner and collapses them into a single measure, which is used as the reward function for training the computing agents:

$$reward = w_1 \cdot r_{local} + w_2 \cdot r_{global}$$

Where "$w_1$" and "$w_2$" represent different weights that can be assigned to these metrics. To achieve effective cooperation between distributed computing agents in the network, the global-level metric $r_{global}$ combines aggregated cell-level measurements from the local and the neighboring cells. This forces neighboring computing agents to cooperate for optimizing a common goal. At the same time $r_{local}$ steers the computing agent's learning to optimize performance in a completely greedy manner. Below there is a list with examples of data that computing agents can use for training:

- Cell state information (local, and from neighboring): This may include data such as number of active users, traffic load, handovers rate.
- Handover events: Log of handover events, including the identifier of the serving cell, the target cell, and the computing device that undergoes the handover.
- Session-level measurement data of computing devices before and after a handover (e.g., throughput, latency, content type).

The following section includes some examples of available data feeds that can be used as input to the computing agents and to compute the rewards during training.

A Big Data platform that collects data from networks and runs 24/7 can be leveraged. It can receive more than 10TB/day of the following data streams:

- MME (mobility data): Cellular network signaling information regarding users' computing device mobility activity. The cellular network supports 2G, 3G and 4G mobile communication technologies. Such a network consists of: (i) the smartphones used by end-users, (ii) the Radio Access Network and (iii) the Core Network. Velocity (per sensor): The logs are collected within seconds; approximately 4TB of data points per day. Veracity: Affected by hardware failures.

- IPFR (web transaction data): Cellular network signaling information regarding users' device web transaction activity. The cellular network supports 2G, 3G and 4G mobile communication technologies. Velocity (per sensor): The logs are collected within seconds; approximately 4TB of data points per day. Veracity: Affected by hardware failures.

- 4G/5G network KPI data: Radio Network Performance data feed, consisting of Key Performance Indicators of cell sites. Every cell site hosts one or multiple antennas for one or more technologies (i.e., 2G, 3G, 4G), and includes multiple cells and sectors. For every cell site the following information: location, radio technologies available, number of cells and radio sectors, and quality-of-service performance metrics (e.g., throughput, latency, packet loss), is had. The invention can collect indicators for every radio sector that it aggregates at postcode level or larger granularity. Velocity (per sensor): The mobile networks indicators are sampled hourly; approximately 30-50GB of data points per day. Veracity: cloud services that aggregate the network indicators.

In other embodiments, the present invention can leverage its multi-agent nature by exploiting the property of *parameter sharing* across the different computing agents deployed in cells. This means that during training computing agents deployed on cells jointly learn how to optimize handover decisions based on their local view of the network (i.e., their local state and information received from neighboring cells). After training, the method produces a single-agent implementation - modeled by one or more neural networks, e.g. Deep Neural Network(s) - that is jointly learned from the individual perspective of all the computing agents (i.e., from the experience of all cells). This is a crucial feature to achieve a robust learned policy that can then be safely deployed in new cells in production.

The cell state information exchanged between computing agents (i.e., cells) may be some relevant data predefined by the network administrator/engineer, or alternatively it can be automatically learned and encoded by artificial neural network modules. In this context, modern Message-Passing NNs [61,62] can be used to automatically generate meaningful embeddings to exchange between computing agents, according to the goal for which they were trained.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, the invention may be implemented as a firmware, firmware/software combination, firmware/hardware combination, or a hardware/firmware/software combination.

The scope of the present invention is defined in the following set of claims.

## Claims

1. A method for efficient and distributed network optimization of a cellular network, the cellular network being distributed in different cells where each cell comprises a base transceiver station providing network coverage to a plurality of computing devices of the cellular network, each computing device being associated to a user, the method comprising:

   a) associating a computing agent to each base transceiver station, each computing agent being able to communicate with computing agents of its neighboring cells;
   b) receiving, by a given computing agent, from at least one given computing device connected to its associated base transceiver station, signal strength information of the given computing device, the signal strength information being measured on the given computing device for the associated base transceiver station and for neighboring cells;
   c) determining, by the given computing agent, a handover decision for said given computing device by means of executing a reinforced learning decision-making algorithm on an established trained policy and on the received signal strength.

2. The method of claim 1, wherein the receiving step b) further comprises b1) receiving statistics about past traffic activity of the given computing device, including traffic volume in a given time period, the received statistics being used by the reinforced learning decision-making algorithm.

3. The method of any one of the previous claims, wherein the receiving step b) further comprises b2) receiving cell state information from its neighboring cells, the cell state information including one or more of the following: statistics of traffic/user load on the cell, historical handover rate, aggregated cell-level quality indicators including throughput, latency, and/or packet loss, the received cell state information being used by the reinforced learning decision-making algorithm.

4. The method of any one of the previous claims, wherein if the handover decision determines that the given computing device is to be handover to a target base transceiver station, the method further comprising sending, by the given computing agent, a handover request to the target base transceiver station according to a cellular network protocol.

5. The method of any one of the previous claims, wherein the trained policy is established by the given computing agent using historical records of handover activity in the cellular network.

6. The method of claim 5, wherein the trained policy is established in an offline manner.

7. The method of claim 5 or 6, wherein the handover activity comprises a log of handover events including an identifier of the cell serving the handover, a target cell and the computing device that undergoes the handover.

8. The method of claim 3, wherein steps b) and c) are performed by each one of a group of computing agents, the method further comprising:

   sharing, by each computing agent of the group, the determined handover decision;
   learning, by the group of computing agents, in cooperation, how to optimize handover decisions based on a local state of the network and on information received from neighboring cells, establishing an optimized handover decision as a result; and
   determining, by the group of computing agents, in cooperation, a single network optimization handover policy using one or more neural networks on the established optimized handover decision.

9. A system for efficient and distributed network optimization of a cellular network, comprising:

   a plurality of base transceiver stations, each base transceiver station being configured to provide coverage to a cell of the cellular network;
   a plurality of computing devices configured to connect to the plurality of base transceiver stations, each computing device being associated to a user; and
   a plurality of computing agents, each computing agent being configured to be associated to a base transceiver station and comprising a memory and one or more processing units to:

   receive, from at least one given computing device connected to its associated base transceiver station, signal strength information of the given computing device, the signal strength information being measured on the given computing device for the associated base transceiver station and for neighboring cells;
   determine a handover decision for said given computing device by means of executing a reinforced learning decision-making algorithm on an established trained policy and on the received signal strength.

10. A device for efficient and distributed network optimization of a cellular network, the device being associated to a given base transceiver station of a cellular network, which is distributed into different cells where each cell comprises a base transceiver station providing coverage to a plurality of computing devices, each one being associated to a user, the device comprising a memory and one or more processing units to:

    receive, from at least one given computing device connected to its associated base transceiver station, signal strength information of the given computing device, the signal strength information being measured on the given computing device for the associated base transceiver station and for neighboring cells;
    determine a handover decision for said given computing device by means of executing a reinforced learning decision-making algorithm on an established trained policy and on the received signal strength.

11. The device of claim 10, wherein the one or more processing units are further configured to receive statistics about past traffic activity of the given computing device, including traffic volume in a given time period, the received statistics being also used by the reinforced learning decision-making algorithm.

12. The device of claim 10 or 11, wherein the one or more processing units are further configured to receive cell state information from its neighboring cells, the cell state information including one or more of the following: statistics of traffic/user load on the cell, historical handover rate, aggregated cell-level quality indicators including throughput, latency, and/or packet loss, the received cell state information being used by the reinforced learning decision-making algorithm.

13. The device of claim 10, 11 or 12, wherein it is configured to establish the trained policy while being offline.

14. A non-transitory computer readable medium comprising code instructions that when executed by a computing device implement the method of any of claims 1 to 8.

**Fig. 1 (Prior Art)**

EP 4 391 644 A1

# Fig. 2 (Prior Art)

# Fig. 3

# Fig. 4

**Cell-based agent _i_**

Agent_i sends cell-level state information to neighboring cells (asynchronous process)

_Agent_i_

Start

Agent_i collects state information from neighboring cells

Agent_i receives a measurement report from a UE connected to it

_UE_{i,k}_

(Triggering event)

Neighboring agents send state information from their associated cells (asynchronous process)

Agent_i collects past state information from neighboring cells

**Agent's decision-making module:**
The RL-based agent makes a handover decision on the UE based on its trained policy (e.g., encoded by a neural network).

Possible actions:
• Keep the UE connected to the cell
• Handover to a target base station (BS_n)

Handover to another cell ?

Yes

Agent_i initiates the handover process to the selected target base station

No

End

BS_1

BS_2

BS_N

EP 4 391 644 A1

18

network state ($t$)

Handover

network state ($t+1$)

| IPFR (web transaction activity) | $wt_1$ | | $wt_1$ |
|---|---|---|---|
| MME (mobility data) | | handover | |
| 4G/5G network KPI data | $KPI_1, KPI_2, ..., KPI_n$ | | $KPI_1, KPI_2, ..., KPI_n$ |

# Fig. 5

Europäisches
Patentamt

European
Patent Office

Office européen
des brevets

## EUROPEAN SEARCH REPORT

Application Number

EP 22 38 3236

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ITURRIA-RIVERA PEDRO ENRIQUE ET AL: "Competitive Multi-Agent Load Balancing with Adaptive Policies in Wireless Networks", 2022 IEEE 19TH ANNUAL CONSUMER COMMUNICATIONS & NETWORKING CONFERENCE (CCNC), IEEE, 8 January 2022 (2022-01-08), pages 796-801, XP034083274, DOI: 10.1109/CCNC49033.2022.9700667 [retrieved on 2022-01-31] * sections I and III * | 1-14 | INV. H04W36/00 G06N3/092 ADD. H04W24/02 |
| A | WO 2020/159430 A1 (ERICSSON TELEFON AB L M [SE]) 6 August 2020 (2020-08-06) * page 18 * | 6,13 | |
| A | US 2017/118688 A1 (GUVENC ISMAIL [US]) 27 April 2017 (2017-04-27) * paragraphs [0066], [0092]; figures 7,12 * | 1-14 | |

|  | TECHNICAL FIELDS SEARCHED (IPC) |
|---|---|
|  | H04W G06N |

The present search report has been drawn up for all claims

| Place of search | Date of completion of the search | Examiner |
|---|---|---|
| Munich | 6 June 2023 | Domingos, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 3236

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2023

| Patent document cited in search report | | Publication date | Patent family member(s) | | Publication date |
|---|---|---|---|---|---|
| WO 2020159430 | A1 | 06-08-2020 | EP | 3918839 A1 | 08-12-2021 |
| | | | US | 2022303843 A1 | 22-09-2022 |
| | | | WO | 2020159430 A1 | 06-08-2020 |
| US 2017118688 | A1 | 27-04-2017 | US | 9622133 B1 | 11-04-2017 |
| | | | US | 2017171761 A1 | 15-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012045337 A1
- CN 102638831 B
- US 10952119 B
- WO 2010002926 A

**Non-patent literature cited in the description**

- **LI, L. et al.** A Measurement Study on TCP Behaviors in HSPA+ Networks on High- speed Rails. *INFOCOM,* 2015
- Handover Procedures. *3GPP. 2011. TS23.009*
- **SUTTON et al.** Reinforcement learning: An introduction. MIT press, 2018
- **SIDDIQUE et al.** Learning fair policies in multiobjective (deep) reinforcement learning with average and discounted rewards. *ICML,* 2020
- **HU et al.** Dynamic beam hopping method based on multi-objective deep reinforcement learning for next-generation satellite broadband systems. *IEEE ToB,* 2020
- **PEREZ et al.** Multi-objective reinforcement learning for responsive grids. *Journal of Grid Computing,* 2010
- **LI et al.** Urban driving with multi-objective deep reinforcement learning. *AAMAS,* 2019
- **MÉNDEZ-HERNÁNDEZ et al.** A multi-objective reinforcement learning algorithm for jssp. *ICANN,* 2019
- **XINSHI CHEN ; SHUANG LI ; HUI LI ; SHAOHUA JIANG ; YUAN QI ; LE SONG.** Generative Adversarial User Model for Reinforcement Learning Based Recommendation System. *International Conference on Machine Learning.,* 2019, 1052-1061
- Top-k off-policy correction for a REINFORCE recommender system. **MINMIN CHEN ; ALEX BEUTEL ; PAUL COVINGTON ; SAGARJAIN ; FRANCOIS BELLETTI ; ED H CHI.** Proceedings of the Twelfth ACM International Conference on Web Search and Data Mining. ACM, 2019, 456-464
- **SCOTT FUJIMOTO ; DAVID MEGER ; DOINA PRE-CUP.** Off-policy deep reinforcement learning without exploration. *International Conference on Machine Learning,* 2019, 2052-2062
- **SUTTON, R. S. ; BARTO, A. G.** Introduction to Reinforcement Learning. MIT Press, 1998
- Batch reinforcement learning. **LANGE, S. ; GABEL, T. ; RIEDMILLER, M.** Reinforcement Learning. Springer, 2012, 45-73
- **KUMAR, A.** Data-driven deep reinforcement learning. *BAIR Blog,* 2019, https://bair.berkeley.edu/blog/2019/12/05/bear
- **FU, J. ; KUMAR, A. ; NACHUM, O. ; TUCKER, G. ; LEVINE, S.** D4rl: Datasets for deep data-driven reinforcement learning. *arXiv,* 2020
- **IAN GOODFELLOW ; JEAN POUGET-ABADIE ; MEHDI MIRZA ; BING XU ; DAVID WARDE-FARLEY ; SHERJIL OZAIR ; AARON COURVILLE ; YOSHUA BENGIO.** Generative adversarial nets. *Advances in neural information processing systems,* 2014, 2672-2680
- **SADEGHI, F. ; LEVINE, S.** CAD2RL: Real single-image flight without a single real image. *Robotics: Science and Systems,* 2017
- **TAN, J. ; ZHANG, T ; COUMANS, E. ; ISCEN, A. ; BAI, Y. ; HAFNER, D. ; BOHEZ, S. ; VANHOUCKE, V.** Sim-to-real: Learning agile locomotion for quadruped robots. *arXiv: 1804.10332,* 2018
- Closing the sim-to-real loop: Adapting simulation randomization with real world experience. **CHEBOTAR, Y. ; HANDA, A. ; MAKOVIYCHUK, V. ; MACKLIN, M. ; ISSAC, J. ; RATLIFF, N. ; FOX, D.** 2019 International Conference on Robotics and Automation (ICRA). IEEE, 2019, 8973-8979
- **T. HAARNOJA ; A. ZHOU ; P. ABBEEL ; S. LEVINE.** Soft actor-critic: Off-policy maximum entropy deep reinforcement learning with a stochastic actor. *arXiv preprint arXiv:1801.01290,* 2018
- **D. ORMONEIT ; S'. SEN.** Kernel-based reinforcement learning. *Machine Learning,* 2002, vol. 49 (2), 161-178
- **D. ERNST ; P. GEURTS ; L. WEHENKEL.** Tree-based batch mode reinforcement learning. *Journal of Machine Learning Research,* 2005, vol. 6, 503-556
- Neural fitted q iteration-first experiences with a data efficient neural reinforcement learning method. **M. RIEDMILLER.** European Conference on Machine Learning. Springer, 2005, 317-328
- **Y. WU ; G. TUCKER ; O. NACHUM.** Behavior regularized offline reinforcement learning. *arXiv preprint arXiv: 1911.11361,* 2019

- **N. JAQUES ; A. GHANDEHARIOUN ; J. H. SHEN ; C. FERGUSON ; A. LAPEDRIZA ; N. JONES ; S. GU ; R. PICARD.** Way off-policy batch deep reinforcement learning of implicit human preferences in dialog. *arXiv preprint arXiv:1907.00456,* 2019
- **JENS KOBER ; J ANDREW BAGNELL ; JAN PETERS.** Reinforcement learning in robotics: A survey. *The International Journal of Robotics Research,* 2013, vol. 32 (11), 1238-1274
- **A. KUMAR ; J. FU ; G. TUCKER ; S. LEVINE.** Stabilizing off-policy q-learning via bootstrapping error reduction. *arXiv preprint arXiv:1906.00949,* 2019
- **YOUGANG LYU ; ZIHAN WANG ; ZHAOCHUN REN ; PENGJIE REN ; ZHUMIN CHEN ; XIAOZHONG LIU ; YUJUN LI ; HONGSONG LI ; HONGYE SONG.** Improving legal judgment prediction through reinforced criminal element extraction. *Information Processing & Management,* 2022, vol. 59 (1), 102780
- **S. SINHA ; J. SONG ; A. GARG ; S. ERMON.** Experience replay with likelihood-free importance weights. *arXiv preprint arXiv:2006.13169,* 2020
- **VOLODYMYR MNIH ; KORAY KAVUKCUOGLU ; DAVID SILVER ; ANDREI A RUSU ; JOEL VENESS ; MARC G BELLEMARE ; ALEX GRAVES ; MARTIN RIEDMILLER ; ANDREAS K FIDJELAND ; GEORG OSTROVSKI et al.** Human-level control through deep reinforcement learning. *Nature,* 2015, vol. 518 (7540), 529
- Off-policy deep reinforcement learning without exploration. **S. FUJIMOTO ; D. MEGER ; D. PRECUP.** International Conference on Machine Learning. PMLR, 2019, 2052-2062
- **A. AJAY ; A. KUMAR ; P. AGRAWAL ; S. LEVINE ; O. NACHUM.** Opal: Offline primitive discovery for accelerating offline reinforcement learning. *arXiv preprint arXiv:2010.13611,* 2020
- **J. BUCKMAN ; C. GELADA ; M. G. BELLEMARE.** The importance of pessimism in fixed-dataset policy optimization. *arXiv preprint arXiv:2009.06799,* 2020
- **RÉMI MUNOS ; TOM STEPLETON ; ANNA HARUTYUNYAN ; MARC BELLEMARE.** Safe and efficient off-policy reinforcement learning. *Advances in Neural Information Processing Systems,* 2016, 1054-1062
- **A. KUMAR ; A. ZHOU ; G. TUCKER ; S. LEVINE.** Conservative q-learning for offline reinforcement learning. *arXiv preprint arXiv:200604779,* 2020
- **T. YU ; G. THOMAS ; L. YU ; S. ERMON ; J. ZOU ; S. LEVINE ; C. FINN ; T. MA.** Mopo: Model-based offline policy optimization. *arXiv preprint arXiv:2005.13239,* 2020
- **R. KIDAMBI ; A. RAJESWARAN ; P. NETRAPALLI ; T. JOACHIMS.** Morel: Model-based offline reinforcement learning. *arXiv preprint arXiv:2005.05951,* 2020
- **DAVID SILVER ; AJA HUANG ; CHRIS J MADDISON ; ARTHUR GUEZ ; LAURENT SIFRE ; GEORGE VAN DEN DRIESSCHE ; JULIAN SCHRITTWIESER ; LOANNIS ANTONOGLOU ; VEDA PANNEERSHEL- VAM ; MARC LANCTOT et al.** Mastering the game of Go with deep neural networks and tree search. *nature,* 2016, vol. 529 (7587), 484
- **ARAVIND SRINIVAS ; MICHAEL LASKIN ; PIETER ABBEEL.** Curl: Contrastive unsupervised representations for reinforcement learning. *arXiv preprint arXiv:2004.04136,* 2020
- **JING-CHENG SHI ; YANG YU ; QING DA ; SHI-YONG CHEN ; AN-XIANG ZENG.** Virtual-taobao: Virtualizing real-world online retail environment for reinforce- ment learning. *Proceedings of the AAAI Conference on Artificial Intelligence,* 2019, vol. 33, 4902-4909
- **CANESE, LORENZO et al.** Multi-agent reinforcement learning: A review of challenges and applications. *Applied Sciences,* 2021, vol. 11 (11), 4948
- **FERIANI, AMAL ; EKRAM HOSSAIN.** Single and multi-agent deep reinforcement learning for AI-enabled wireless networks: A tutorial. *IEEE Communications Surveys & Tutorials,* 2021, vol. 23 (2), 1226-1252
- Markov games as a framework for multi-agent reinforcement learning. **M. L. LITTMAN.** Machine learning proceeding. Elsevier, 1994, 157-163
- **F. A. OLIEHOEK ; C. AMATO et al.** A concise introduction to decentralized POMDPs. Springer, 2016, vol. 1
- **KAR, S. ; MOURA, J.M.F. ; POOR, H.V.** QD-Learning: A Collaborative Distributed Strategy for Multi-Agent Reinforcement Learning Through Consensus + Innovations. *IEEE Trans. Signal Process.,* 2013, vol. 61, 1848-1862
- Stabilising Experience Replay for Deep Multi-Agent Reinforcement Learning. **FOERSTER, J. ; NARDELLI, N. ; FARQUHAR, G. ; TORR, P. ; KOHLI, P. ; WHITESON, S.** Proceedings of the 34th International Conference on Machine Learning. Sydney, 06 August 2017
- **FOERSTER, J.N. ; ASSAEL, Y.M. ; DE FREITAS, N. ; WHITESON, S.** Learning to Communicate to Solve Riddles with Deep Distributed Recurrent Q-Networks. *arXiv 2016, arXiv:1602.02672*
- **R. LOWE ; Y. I. WU ; A. TAMAR ; J. HARB ; O. P. ABBEEL ; I. MORDATCH.** Multi-agent actor-critic for mixed cooperative-competitive environments. *Advances in neural information processing systems,* 2017, 6379-6390

- **GUPTA, J.K. ; EGOROV, M. ; KOCHENDERFER, M.** Cooperative Multi-agent Control Using Deep Reinforcement Learning. *Proceedings of the International Conference on Autonomous Agents and Multiagent Systems, São Paulo, Brazil,* 08 May 2017, vol. 10642
- **LUONG, NGUYEN CONG et al.** Applications of deep reinforcement learning in communications and networking: A survey. *IEEE Communications Surveys & Tutorials,* 2019, vol. 21 (4), 3133-3174
- **TANVEER, JAWAD et al.** An overview of reinforcement learning algorithms for handover management in 5G ultra-dense small cell networks. *Applied Sciences,* 2022, vol. 12 (1), 426
- **SANA, MOHAMED et al.** Multi-agent reinforcement learning for adaptive user association in dynamic mmWave networks. *IEEE Transactions on Wireless Communications,* 2020, vol. 19 (10), 6520-6534
- **SANA, MOHAMED et al.** Multi-agent deep reinforcement learning for distributed handover management in dense mmWave networks. *ICASSP 2020-2020 IEEE International Conference on Acoustics, Speech and Signal Processing (ICASSP),* 2020
- **LI, ZHONG ; CHENG WANG ; CHANG-JUN JIANG.** User association for load balancing in vehicular networks: An online reinforcement learning approach. *IEEE Transactions on Intelligent Transportation Systems,* 2017, vol. 18 (8), 2217-2228
- **DINH, THI HA LY et al.** Deep reinforcement learning-based user association in sub6ghz/mmwave integrated networks. *IEEE CCNC,* 2021
- **DING, HUI et al.** A deep reinforcement learning for user association and power control in heterogeneous networks. *Ad Hoc Networks,* 2020, vol. 102, 102069
- **GUO, DELIN et al.** Joint optimization of handover control and power allocation based on multi-agent deep reinforcement learning. *IEEE Transactions on Vehicular Technology,* 2020, vol. 69 (11), 13124-13138
- **SHAO, YAN et al.** Graph attention network-based multi-agent reinforcement learning for slicing resource management in dense cellular network. *IEEE Transactions on Vehicular Technology,* 2021, vol. 70 (10), 10792-10803
- **VELIČKOVIĆ, PETAR et al.** Graph attention networks. *arXiv preprint arXiv:1710.10903,* 2017
- **LEVINE, S. ; KUMAR, A. ; TUCKER, G. ; FU, J.** Offline Reinforcement Learning: Tutorial, Review, and Perspectives on Open Problems. *ArXiv, abs/2005.01643,* 2020
- Message passing neural networks. **GILMER, JUSTIN et al.** Machine learning meets quantum physics. Springer, 2020, 199-214
- **J. SUÁREZ-VARELA et al.** Graph Neural Networks for Communication Networks: Context, Use Cases and Opportunities. *IEEE Network,* 2022